# EUROPÄISCHE PATENTSCHRIFT

(11) **EP 3 912 837 B1**
(45) Veröffentlichungstag und Bekanntmachung des Hinweises auf die Patenterteilung: **13.11.2024**
(21) Anmeldenummer: 21167996.4
(22) Anmeldetag: 13.04.2021
(51) Int. Cl.: B60H 1/22, B60H 1/00

(54) **HEIZSYSTEM IN EINEM FAHRZEUG**
HEATING SYSTEM IN A VEHICLE
SYSTÈME DE CHAUFFAGE DANS UN VÉHICULE

(30) Priorität: 19.05.2020 DE 102020113466
(43) Veröffentlichungstag der Anmeldung: 24.11.2021
(73) Patentinhaber: Eberspächer Climate Control Systems GmbH, 73730 Esslingen (DE); AUDI AG, 85057 Ingolstadt (DE)
(72) Erfinder: Eger, Johannes, Esslingen (DE); Findeis, Thorsten, Albershausen (DE); Fritsch, Martin, Ingolstadt (DE)
(74) Vertreter: Ruttensperger Lachnit Trossin Gomoll

(56) Entgegenhaltungen:
- EP-A1- 3 424 761
- DE-A1- 102018 116 737
- DE-C1- 10 135 416
- US-A- 5 660 329

## Beschreibung

Die vorliegende Erfindung betrifft ein Heizsystem in einem Fahrzeug, welches dazu genutzt werden kann, Wärme auf ein im Allgemeinen flüssiges Wärmeträgermedium zu übertragen.

Ein derartiges Heizsystem umfasst ein Heizgerät mit einer Heizanordnung und einer Wärmetauscheranordnung zur Übertragung von in der Heizanordnung bereitgestellter Wärme auf das zu erwärmende Wärmeträgermedium, wobei die Wärmetauscheranordnung einen vom dem Wärmeträgermedium durchströmbaren Wärmeträgermedium-Strömungsraum mit einem Strömungsraum-Eintritt und einem Strömungsraum-Austritt umfasst. Das Heizsystem umfasst ferner eine Wärmeträgermediumpumpe mit einem Pumpeneintritt und einem Pumpenaustritt, einen an den Pumpeneintritt anschließenden ersten Wärmeträgermedium-Leitungsbereich sowie einen an den Pumpenaustritt anschließenden zweiten Wärmeträgermedium-Leitungsbereich.

Die in dem Heizgerät bereitgestellte und über das in der Wärmetauscheranordnung erwärmte Wärmeträgermedium transportierte Wärme kann beispielsweise in einem in einen Wärmeträgermedium-Strömungskreislauf integrierten Wärmetauscher auf die in einen Fahrzeuginnenraum einzuleitende Luft übertragen werden oder in einem in den Wärmeträgermedium-Strömungskreislauf integrierten Antriebsaggregat, beispielsweise Brennkraftmaschine, dazu genutzt werden, dieses vor oder bei Betriebsaufnahme thermisch zu konditionieren.

Aus der EP 3 424 761 A1 ist eine Trägeranordnung zur Anbringung eines Heizgerätes an einem Fahrzeug bekannt, welche dann, wenn diese Trägeranordnung zusammen mit den daran vorgesehenen Systembereichen in ein Fahrzeug integriert ist, Teil eines Heizsystems gemäß dem Oberbegriff des Anspruchs 1 ist. Diese bekannte Trägeranordnung umfasst von einem Wärmeträgermedium durchströmbare Leitungsbereiche bereitstellende Module. An die an diesen Modulen bereitgestellten Leitungsbereiche ist eine Wärmeträgermediumpumpe vermittels einer flexiblen Rohrleitung angebunden.

Es ist die Aufgabe der vorliegenden Erfindung, ein Heizsystem in einem Fahrzeug bereitzustellen, welches bei einfach zu realisierendem Aufbau zu einer geminderten Schallübertragung beiträgt.

Erfindungsgemäß wird diese Aufgabe gelöst durch ein Heizsystem in einem Fahrzeug gemäß Anspruch 1, umfassend:
- ein Heizgerät mit einer Heizanordnung und einer Wärmetauscheranordnung zur Übertragung von in der Heizanordnung bereitgestellter Wärme auf ein zu erwärmendes Wärmeträgermedium, wobei die Wärmetauscheranordnung einen vom dem Wärmeträgermedium durchströmbaren Wärmeträgermedium-Strömungsraum mit einem Strömungsraum-Eintritt und einem Strömungsraum-Austritt umfasst,
- eine Wärmeträgermediumpumpe mit einem Pumpeneintritt und einem P umpenaustritt,
- einen an den Pumpeneintritt anschließenden ersten Wärmeträgermedium-Leitungsbereich,
- einen an den Pumpenaustritt anschließenden zweiten Wärmeträgermedium-Leitungsbereich.

Gemäß der vorliegenden Erfindung ist die Wärmeträgermediumpumpe in dem Fahrzeug freitragend angeordnet.

Das freitragende Anordnen der Wärmeträgermediumpumpe im Fahrzeug bedeutet im Sinne der vorliegenden Erfindung, dass zwischen der Wärmeträgermediumpumpe und dem Fahrzeug, also beispielsweise einem Fahrzeugrahmen oder am Fahrzeugrahmen getragenen Tragestrukturen, keine direkte Trageverbindung beispielsweise dadurch besteht, dass ein Gehäuse der Wärmeträgermediumpumpe an eine derartige Tragestruktur angeschraubt ist. Irgendwelche eine derartige Trageverbindung der Wärmeträgermediumpumpe mit dem Fahrzeug bereitstellenden Komponenten sind daher nicht erforderlich. Dies vereinfacht nicht nur die Aufbaustruktur des Heizsystems, sondern vermeidet auch den Aufbau einer Schallübertragungsbrücke zwischen der Wärmeträgermediumpumpe und dem Fahrzeug durch eine derartige eine direkte Verbindung zwischen der Wärmeträgermediumpumpe und dem Fahrzeug herstellende Baugruppe. Das vergleichsweise aufwendige Ausgestalten einer derartigen Baugruppe zum Minimieren der Körperschallübertragung zwischen der Wärmeträgermediumpumpe und dem Fahrzeug ist daher nicht erforderlich.

Um gleichwohl dafür zu sorgen, dass die Wärmeträgermediumpumpe stabil und in definierter Position im Fahrzeug untergebracht werden kann, ist die Wärmeträgermediumpumpe ausschließlich über den ersten Wärmeträgermedium-Leitungsbereich und über den zweiten Wärmeträgermedium-Leitungsbereich an dem Fahrzeug getragen ist.

Dazu ist in Zuordnung zu dem ersten Wärmeträgermedium-Leitungsbereich eine erste Trägeranordnung zum Tragen des ersten Wärmeträgermedium-Leitungsbereichs an dem Fahrzeug vorgesehen.

Zusätzlich ist für eine noch stabilere Positionierung der Wärmeträgermediumpumpe in Zuordnung zu dem zweiten Wärmeträgermedium-Leitungsbereich eine zweite Trägeranordnung zum Tragen des zweiten Wärmeträgermedium-Leitungsbereichs an dem Fahrzeug vorgesehen.

Um die Körperschallübertragung über die an die Wärmeträgermediumpumpe anschließenden Wärmeträgermedium-Leitungsbereiche soweit als möglich zu minimieren, ist der erste Wärmeträgermedium-Leitungsbereich in seinem an den Pumpeneintritt anschließenden Leitungsabschnitt flexibel ausgebildet, und der zweite Wärmeträgermedium-Leitungsbereich ist in seinem an den Pumpenaustritt anschließenden Leitungsabschnitt flexibel ausgebildet. Eine derartige Ausgestaltung bietet sich vor allem dann an, wenn die Wärmeträgermediumpumpe vergleichsweise klein und damit leicht gebaut ist. Auch bei flexibler Integration in einen Wärmeträgermediumkreislauf kann somit eine stabile Positionierung der Wärmeträgermediumpumpe gewährleistet werden.

Hierzu kann beispielsweise der erste Wärmeträgermedium-Leitungsbereich in seinem an den Pumpeneintritt anschließenden Leitungsabschnitt als flexible Kunststoffleitung oder/und als Wellrohr ausgebildet sein.

Alternativ oder zusätzlich kann der zweite Wärmeträgermedium-Leitungsbereich in seinem an den Pumpenaustritt anschließenden Leitungsabschnitt als flexible Kunststoffleitung oder/und als Wellrohr ausgebildet sein.

Es ist in diesem Zusammenhang darauf hinzuweisen, dass im Sinne der vorliegenden Erfindung eine Leitung bzw. ein Leitungsbereich dann als flexibel betrachtet wird, wenn unter den im Betrieb auftretenden Kräften eine derartige Leitung bzw. ein derartiger Leitungsbereich elastisch verformt werden kann und somit eine entsprechende Ausweichbewegung der darüber angekoppelten Wärmeträgermediumpumpe zulässt. Eine starre Leitung bzw. ein starrer Leitungsbereich, beispielsweise ein aus Metallmaterial hergestellter Leitungsbereich, ermöglicht derartige Ausweichbewegungen unter den im Betrieb normalerweise auftretenden Kräften im Wesentlichen nicht.

Bei dem erfindungsgemäßen Heizsystem kann die Heizanordnung eine mit Brennstoff und Verbrennungsluft zu speisende Brennkammerbaugruppe umfassen, so dass die über das Wärmeträgermedium abzuführende Wärme durch die Verbrennung eines Gemisches aus Brennstoff und Verbrennungsluft bereitgestellt wird. Es ist darauf hinzuweisen, dass alternativ oder zusätzlich die Heizanordnung dazu ausgebildet sein kann, durch elektrische Erregung die über das Wärmeträgermedium abzuführende Wärme bereitzustellen.

Insbesondere dann, wenn das zu erwärmende Wärmeträgermedium eine Flüssigkeit ist, ist es für die Bereitstellung eines geschlossenen Wärmeträgermediumkreislaufs vorteilhaft, wenn die Wärmetauscheranordnung ein inneres Wärmetauschergehäuse mit einer inneren Umfangswandung und einer inneren Bodenwandung sowie ein äußeres Wärmetauschergehäuse mit einer äußeren Umfangswandung und einer äußeren Bodenwandung umfasst, wobei der Wärmeträgermedium-Strömungsraum zwischen dem inneren Wärmetauschergehäuse und dem äußeren Wärmetauschergehäuse gebildet ist.

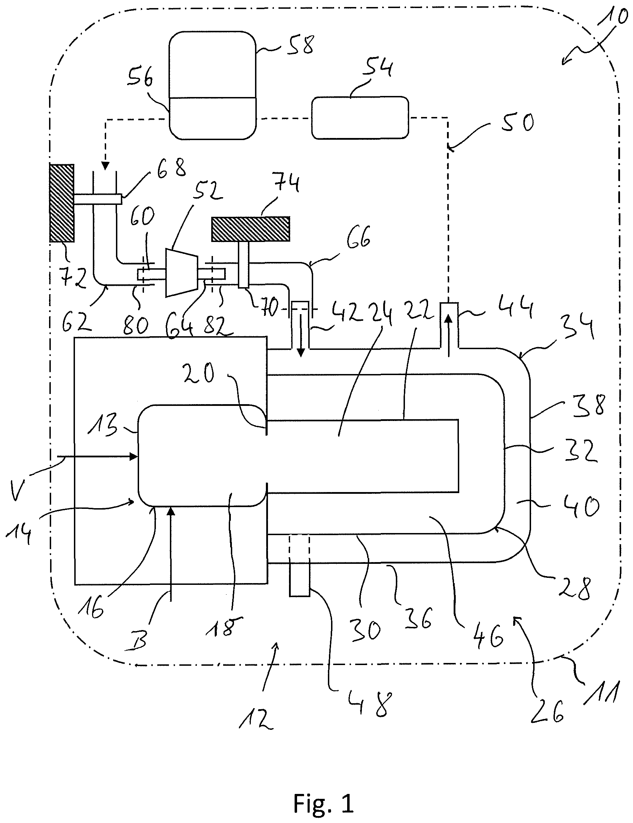

Die vorliegende Erfindung wird nachfolgend mit Bezug auf die beiliegende Fig. 1 detailliert beschrieben, welche ein Heizsystem in einem Fahrzeug prinzipartig darstellt.

In der Fig. 1 ist ein in ein Fahrzeug 11 integriertes bzw. zu integrierendes Heizsystem allgemein mit 10 bezeichnet. Dieses Heizsystem 10 umfasst ein im dargestellten Ausgestaltungsbeispiel brennstoffbetriebenes Heizgerät 12. Das Heizgerät 12 wiederum umfasst eine im Falle eines brennstoffbetriebenen Heizgeräts 12 als Brennkammerbaugruppe 13 bereitgestellte Heizanordnung 14 mit einer in einem Brennkammergehäuse 16 ausgebildeten Brennkammer 18, in welcher ein Gemisch aus vermittels eines Verbrennungsluftgebläses, beispielsweise Seitenkanalgebläse, zugeführter Verbrennungsluft V und vermittels einer Brennstoffpumpe, beispielsweise Dosierpumpe, zugeführtem Brennstoff B verbrannt wird. Bei der Verbrennung entstehendes Verbrennungsabgas verlässt die Brennkammer 18 über eine Flammblende 20 in Richtung zu einem in einem Flammrohr 22 gebildeten Abgasströmungsraum 24.

Das Heizgerät 12 umfasst ferner eine Wärmetauscheranordnung 26. Diese ist im Wesentlichen topfartig ausgebildet mit einem inneren Wärmetauschergehäuse 28 mit einer inneren Umfangswandung 30 und einer inneren Bodenwandung 32 sowie mit einem äußeren Wärmetauschergehäuse 34 mit einer äußeren Umfangswandung 36 und einer äußeren Bodenwandung 38. Zwischen dem inneren Wärmetauschergehäuse 28 und dem äußeren Wärmetauschergehäuse 34 ist ein Wärmeträgermedium-Strömungsraum 40 gebildet. Über einen beispielsweise einen Eintrittsstutzen umfassenden Strömungsraum-Eintritt 42 strömt das zu erwärmende Wärmeträgermedium, im Allgemeinen eine Flüssigkeit, in den Wärmeträgermedium-Strömungsraum 40. Über einen beispielsweise ebenfalls einen Stutzen umfassenden Strömungsraum-Austritt 44 verlässt das in der Wärmetauscheranordnung 26 erwärmte Wärmeträgermedium den Wärmeträgermedium-Strömungsraum 40.

Um eine thermische Wechselwirkung zwischen dem bei der Verbrennung entstehenden Abgas und dem Wärmeträgermedium zu erzeugen, umgreift das innere Wärmetauschergehäuse 28 das Flammrohr 22, so dass zwischen dem Flammrohr 22 und der inneren Umfangswandung 30 ein ringartiger Abgasrückströmraum 46 gebildet ist. Aus einem axial offenen Ende des Flammrohrs 22 austretendes Abgas strömt auf die innere Bodenwandung 32 zu, wird an dieser nach radial außen umgelenkt und gelangt somit in den Abgasrückströmraum 46. An dem von den beiden Bodenwandungen 32, 38 entfernten axialen Ende ist der Abgasrückströmraum 46 über einen beispielsweise einen Stutzen umfassenden Abgasaustritt 48 nach außen bzw. zu einem Abgasführungssystem offen.

Der Strömungsraum-Eintritt 42 und der Strömungsraum-Austritt 44 sind an einen in Fig. 1 nur prinzipartig dargestellten Wärmeträgermediumkreislauf 50 angeschlossen, so dass eine durch eine Wärmeträgermediumpumpe 52 aufgebaute Zirkulation des Wärmeträgermediums durch den Wärmeträgermedium-Strömungsraum 40 der Wärmetauscheranordnung 26 zur Aufnahme von Wärme und durch Systembereiche hindurch, in welchen diese Wärme dann abgegeben wird, bereitgestellt werden kann. Diese Systembereiche können beispielsweise einen Wärmetauscher 54 umfassen, in welchem die im Wärmeträgermedium transportierte Wärme beispielsweise auf die in einen Fahrzeuginnenraum zu leitende Luft übertragen wird. Ferner können diese Systembereiche den Wassermantel 56 eines als Brennkraftmaschine ausgebildeten Antriebsaggregats 58 umfassen, so dass vor allem bei niedrigen Umgebungstemperaturen das Antriebsaggregat 58 thermisch konditioniert werden kann, bevor dieses in Betrieb gesetzt wird, bzw. bei Inbetriebnahme schneller auf Betriebstemperatur gebracht werden kann.

Der Wärmeträgermediumkreislauf 50 umfasst einen an einen beispielsweise einen Stutzen umfassenden Pumpeneintritt 60 angeschlossenen ersten Wärmeträgermedium-Leitungsbereich 62. Gleichermaßen umfasst der Wärmeträgermedium-Strömungskreislauf 50 einen an einen beispielsweise einen Stutzen umfassenden Pumpenaustritt 64 angeschlossenen zweiten Wärmeträgermedium-Leitungsbereich 66. Im dargestellten Ausgestaltungsbeispiel verbindet der zweite Wärmeträgermedium-Leitungsbereich 66 den Pumpenaustritt 64 mit dem Strömungsraum-Eintritt 62 und ist an diesen angeschlossen. Beispielsweise können die Wärmeträgermedium-Leitungsbereiche 62, 66 auf den Pumpeneintritt 60, den Pumpenaustritt 64 bzw. den Strömungsraum-Eintritt 42 aufgeschoben und daran zum Bereitstellen eines fluiddichten Abschlusses beispielsweise unter Einsatz einer Rohrschelle oder dergleichen festgelegt sein. Auch das Aufstecken unter Erzeugung einer Presspassung ist möglich.

Der erste Wärmeträgermedium-Leitungsbereich 62 kann an seinem von der Wärmeträgermediumpumpe 52 entfernten Ende an einen der zu erwärmenden Systembereiche, beispielsweise den Wassermantel 56, angeschlossen sein, oder kann an einen eine derartige Anbindung bereitstellenden weiteren Leitungsbereich angeschlossen sein.

Bei dem Heizsystem 10 in Fig. 1 ist die Wärmeträgermediumpumpe 52 in dem das Heizsystem 10 aufweisenden Fahrzeug 11 freitragend angeordnet. Dies bedeutet, dass zwischen der Wärmeträgermediumpumpe 52 und dem Fahrzeug 11 keine direkte Trageverbindung besteht. Es sind keine zum Bereitstellen einer derartigen Tragefunktion vorgesehenen Bauteile vorhanden, welche einerseits direkt an die Wärmeträgermediumpumpe 52, beispielsweise ein Pumpengehäuse derselben, beispielsweise durch Verschraubung angebunden sind, und welche andererseits an ein fahrzeugfestes Bauteil, wie z. B. dem Fahrzeugrahmen oder eine daran festgelegte Trägerstruktur, angebunden sind. Eine die direkte Körperschallübertragung zwischen der Wärmeträgermediumpumpe 52 und dem Fahrzeug unterstützende Verbindung wird somit vermieden.

Die Wärmeträgermediumpumpe 52 ist in dem Fahrzeug 11 ausschließlich über die an diese angeschlossenen Wärmeträgermedium-Leitungsbereiche 62, 66 getragen. Vorteilhafterweise in Zuordnung zu jedem dieser beiden Wärmeträgermedium-Leitungsbereiche ist eine jeweilige Trägeranordnung 68, 70 vorgesehen, welche eine Trageverbindung zwischen dem ersten Wärmeträgermedium-Leitungsbereich 62 und einer fahrzeugfesten Tragestruktur 72 bzw. eine Verbindung zwischen dem zweiten Wärmeträgermedium-Leitungsbereich 66 und einer fahrzeugfesten Tragestruktur 74 bereitstellt. Beispielsweise können die beiden Tragestrukturen 72, 74 durch verschiedene Bereiche eines Fahrzeugchassis oder durch verschiedene daran festgelegte Baugruppen bereitgestellt sein.

Die beiden Trägeranordnungen 68, 70 können die Wärmeträgermedium-Leitungsbereiche 62, 66 beispielsweise schellenartig oder klammerartig umgreifende Halteelemente umfassen, die für eine stabile Halterung der jeweiligen Wärmeträgermedium-Leitungsbereiche 62, 66 am Fahrzeug 11 sorgen. Um auch die Körperschallübertragung zwischen der Wärmeträgermediumpumpe 52 und dem Fahrzeug über die Wärmeträgermedium-Leitungsbereiche 62, 66 so weit als möglich auszuschließen, sind diese in ihren an die Wärmeträgermediumpumpe anschließenden Leitungsabschnitten 80, 82 flexibel, also grundsätzlich verformbar, ausgebildet. Beispielsweise können in diesen Leitungsabschnitten 80, 82 die Wärmeträgermedium-Leitungsbereiche 62, 66 aus flexiblem Kunststoffmaterial, beispielsweise Gummi- oder gummiartigem Material, ausgebildet sein, oder/und können als eine Verformung zulassende Wellrohre ausgebildet sein. Die beiden Wärmeträgermedium-Leitungsbereiche 62, 66 sind so ausgebildet, dass der flexible Abschnitt, ausgehend von der Wärmeträgermediumpumpe 52, sich nicht bis zu der jeweils zugeordneten Trägeranordnung 68, 70 erstreckt, sondern noch vor der jeweiligen Trägeranordnung 68, 70 an einen im Wesentlichen starren Leitungsabschnitt des jeweiligen Wärmeträgermedium-Leitungsbereichs 62, 66 anschließt. Dies gewährleistet einerseits durch die jeweils zugeordnete Trägeranordnung 68, 70 eine stabile Halterung bezüglich des Fahrzeugs, stellt andererseits jedoch sicher, dass zwischen dem Bereich dieser Halterung und der Wärmeträgermediumpumpe 52 aufgrund der Flexibilität des jeweiligen Leitungsabschnitts 80, 82 eine starre Verbindung zur Wärmeträgermediumpumpe 52 hin vermieden ist und somit die Übertragung von Körperschall deutlich gemindert werden kann.

Eine derartige Aufhängung der Wärmeträgermediumpumpe 52 über Wärmeträgermedium-Leitungsbereiche 62, 66 oder Leitungsabschnitte 80, 82 derselben, welche teilweise flexibel ausgebildet sind, ist vor allem dann vorteilhaft, wenn die Wärmeträgermediumpumpe 52 vergleichsweise klein aufgebaut ist und somit aufgrund des vergleichsweise geringen Gewichts derselben auch durch flexible Leitungsbereiche bzw. Leitungsabschnitte stabil getragen werden kann. Gleichwohl ist bei teilweise flexibler Ausgestaltung der Wärmeträgermedium-Leitungsbereiche 62, 66 die zwischen einer jeweiligen Trägeranordnung 68, 70 und der Wärmeträgermediumpumpe 52 liegende Erstreckungslänge so gewählt ist, dass einerseits eine stabile Halterung der Wärmeträgermediumpumpe 52 gewährleistet ist, also die Erstreckungslänge nicht zu groß ist, dass andererseits aber die Übertragung von Körperschall über die Wärmeträgermedium-Leitungsbereich 62, 66 weitestgehend ausgeschlossen ist, die Erstreckungslänge also nicht zu kurz ist.

Mit dem erfindungsgemäßen Aufbau eines Heizsystems, bei welchem eine direkte Trageverbindung zwischen der Wärmeträgermediumpumpe und einem das Heizsystem aufweisenden Fahrzeug vermieden ist, wird einerseits ein einfach zu realisierender Aufbau vorgesehen, da auf Komponenten, welche diese direkte Verbindung zwischen der Wärmeträgermediumpumpe und dem Fahrzeug herstellen, verzichtet wird. Auch an einem das Heizgerät selbst am Fahrzeug haltenden Träger müssen somit keine baulichen Maßnahmen vorgesehen werden, die beispielsweise eine direkte Ankopplung der Wärmeträgermediumpumpe an diesen ermöglichen könnten. Die gleichwohl stabile Positionierung der Wärmeträgermediumpumpe in einem Fahrzeug wird über die an diese angeschlossenen Wärmeträgermedium-Leitungsbereiche realisiert, welche wiederum durch diesen zugeordnete Trägeranordnungen definiert in einem Fahrzeug gehalten werden. Somit wird ein kostengünstiger, zu einer Gewichtseinsparung führender Aufbau erreicht, bei welchem zusätzlich aufgrund des Vermeidens eines direkten Kontakts zwischen der Wärmeträgermediumpumpe und dem Fahrzeug die Übertragung von Körperschall oder von Vibrationen zwischen der Pumpe und dem Fahrzeug deutlich minimiert ist.

Bei dem in Fig. 1 dargestellten Heizsystem können unter Ausnutzung der Aufbauprinzipien der vorliegenden Erfindung selbstverständlich verschiedenste Variationen vorgesehen sein. So kann beispielsweise der Pumpenaustritt der Wärmeträgermediumpumpe mit den zu erwärmenden Systembereichen verbunden sein, so dass das von der Wärmeträgermediumpumpe abgegebene Wärmeträgermedium zunächst die zu erwärmenden Systembereiche und dann den Wärmeträgermedium-Strömungsraum durchströmt. Auch der Wärmeträgermedium-Strömungskreislauf kann anders ausgestaltet sein. So kann dieser mehrere Abzweigungen aufweisen, so dass zu erwärmende Systembereiche parallel oder bei Einsatz entsprechender Ventile selektiv durchströmt werden können. Beispielsweise kann der Wärmeträgermedium-Strömungskreislauf im Wesentlichen den in einem Fahrzeug vorgesehenen Kühlwasserkreislauf einer als Antriebsaggregat vorgesehenen Brennkraftmaschine umfassen.

## Patentansprüche

1. Heizsystem in einem Fahrzeug (11), umfassend:
- ein Heizgerät (12) mit einer Heizanordnung (14) und einer Wärmetauscheranordnung (26) zur Übertragung von in der Heizanordnung (14) bereitgestellter Wärme auf ein zu erwärmendes Wärmeträgermedium, wobei die Wärmetauscheranordnung (26) einen vom dem Wärmeträgermedium durchströmbaren Wärmeträgermedium-Strömungsraum (40) mit einem Strömungsraum-Eintritt (42) und einem Strömungsraum-Austritt (44) umfasst,
- eine Wärmeträgermediumpumpe (52) mit einem Pumpeneintritt (60) und einem Pumpenaustritt (64),
- einen an den Pumpeneintritt (60) anschließenden ersten Wärmeträgermedium-Leitungsbereich (62), wobei der erste Wärmeträgermedium-Leitungsbereich (62) in seinem an den Pumpeneintritt (60) anschließenden Leitungsabschnitt (80) flexibel ausgebildet ist,
- einen an den Pumpenaustritt (64) anschließenden zweiten Wärmeträgermedium-Leitungsbereich (66), wobei der zweite Wärmeträgermedium-Leitungsbereich (66) in seinem an den Pumpenaustritt (64) anschließenden Leitungsabschnitt (82) flexibel ausgebildet ist,
wobei in Zuordnung zu dem ersten Wärmeträgermedium-Leitungsbereich (62) eine erste Trägeranordnung (68) zum Tragen des ersten Wärmeträgermedium-Leitungsbereichs (62) an dem Fahrzeug (11) vorgesehen ist und in Zuordnung zu dem zweiten Wärmeträgermedium-Leitungsbereich (66) eine zweite Trägeranordnung (70) zum Tragen des zweiten Wärmeträgermedium-Leitungsbereichs (66) an dem Fahrzeug (11) vorgesehen ist, wobei die Wärmeträgermediumpumpe (52) in dem Fahrzeug dadurch freitragend angeordnet ist, dass die Wärmeträgermediumpumpe (52) ausschließlich über den an diese anschließenden ersten Wärmeträgermedium-Leitungsbereich (60) und den an diese anschließenden zweiten Wärmeträgermedium-Leitungsbereich (66) an dem Fahrzeug (11) getragen ist, wobei jeder Wärmeträgermedium-Leitungsbereich von erstem Wärmeträgermedium-Leitungsbereich (60) und zweitem Wärmeträgermedium-Leitungsbereich (66) einen an die Wärmeträgermediumpumpe (62) anschließenden flexiblen Leitungsabschnitt (80, 82) und einen an den flexiblen Leitungsabschnitt (80, 82) anschließenden starren Leitungsabschnitt aufweist, **dadurch gekennzeichnet, dass** bei jedem Wärmeträgermedium-Leitungsbereich von erstem Wärmeträgermedium-Leitungsbereich (60) und zweitem Wärmeträgermedium-Leitungsbereich (66) der flexible Leitungsabschnitt (80, 82) ausgehend von der Wärmeträgermediumpumpe 52 vor der diesem zugeordneten Trägeranordnung (68 70) an den starren Leitungsabschnitt anschließt.

2. Heizsystem nach Anspruch 1, **dadurch gekennzeichnet, dass** der erste Wärmeträgermedium-Leitungsbereich (62) in seinem an den Pumpeneintritt (60) anschließenden Leitungsabschnitt (80) als flexible Kunststoffleitung oder/und als Wellrohr ausgebildet ist.

3. Heizsystem nach Anspruch 1 oder 2, **dadurch gekennzeichnet, dass** der zweite Wärmeträgermedium-Leitungsbereich (66) in seinem an den Pumpenaustritt (64) anschließenden Leitungsabschnitt (82) als flexible Kunststoffleitung oder/und als Wellrohr ausgebildet ist.

4. Heizsystem nach einem der vorangehenden Ansprüche, **dadurch gekennzeichnet, dass** die Heizanordnung (14) eine mit Brennstoff und Verbrennungsluft zu speisende Brennkammerbaugruppe (13) umfasst.

5. Heizsystem nach einem der vorangehenden Ansprüche, **dadurch gekennzeichnet, dass** die Wärmetauscheranordnung (26) ein inneres Wärmetauschergehäuse (28) mit einer inneren Umfangswandung (30) und einer inneren Bodenwandung (32) sowie ein äußeres Wärmetauschergehäuse (34) mit einer äußeren Umfangswandung (36) und einer äußeren Bodenwandung (38) umfasst, wobei der Wärmeträgermedium-Strömungsraum (40) zwischen dem inneren Wärmetauschergehäuse (28) und dem äußeren Wärmetauschergehäuse (34) gebildet ist.

## Claims

1. Heating system in a vehicle (11), comprising:
- a heater (12) with a heating arrangement (14) and a heat exchanger arrangement (26) for transferring heat provided in the heating arrangement (14) to a heat transfer medium to be heated, wherein the heat exchanger arrangement (26) comprises a heat transfer medium flow chamber (40) through which the heat transfer medium can flow and has a flow chamber inlet (42) and a flow chamber outlet (44),
- a heat transfer medium pump (52) with a pump inlet (60) and a pump outlet (64),
- a first heat transfer medium line region (62) adjoining the pump inlet (60), wherein the first heat transfer medium line region (62) is flexible in its line section (80) adjoining the pump inlet (60),
- a second heat transfer medium line region (66) adjoining the pump outlet (64), wherein the second heat transfer medium line region (66) is flexible in its line section (82) adjoining the pump outlet (64),
wherein a first support arrangement (68) is provided in association with the first heat transfer medium line region (62) for supporting the first heat transfer medium line region (62) on the vehicle (11) and a second support arrangement (70) is provided in association with the second heat transfer medium line region (66) for supporting the second heat transfer medium line region (66) on the vehicle (11), wherein the heat transfer medium pump (52) is arranged in the vehicle in a self-supporting manner in that the heat transfer medium pump (52) is supported on the vehicle (11) exclusively via the first heat transfer medium line region (60) adjoining it and the second heat transfer medium line region (66) adjoining it, wherein each heat transfer medium line region out of the first heat transfer medium line region (60) and the second heat transfer medium line region (66) has a flexible line section (80, 82) adjoining the heat transfer medium pump (62) and a rigid line section adjoining the flexible line section (80, 82), **characterized in that** in each heat transfer medium line section out of the first heat transfer medium line section (60) and the second heat transfer medium line section (66), the flexible line section (80, 82), starting from the heat transfer medium pump (52), adjoins the rigid line section in front of the support arrangement (68, 70) assigned thereto.

2. Heating system according to claim 1, **characterized in that** the first heat transfer medium line region (62) is designed as a flexible plastic line or/and as a corrugated line in its line section (80) adjoining the pump inlet (60).

3. Heating system according to claim 1 or 2, **characterized in that** the second heat transfer medium line region (66) is designed in its line section (82) adjoining the pump outlet (64) as a flexible plastic line or/and as a corrugated line.

4. Heating system according to one of the preceding claims, **characterized in that** the heating arrangement (14) comprises a combustion chamber assembly (13) to be fed with fuel and combustion air.

5. Heating system according to one of the preceding claims, **characterized in that** the heat exchanger arrangement (26) comprises an inner heat exchanger housing (28) with an inner peripheral wall (30) and an inner bottom wall (32) and an outer heat exchanger housing (34) with an outer peripheral wall (36) and an outer bottom wall (38), wherein the heat transfer medium flow chamber (40) is formed between the inner heat exchanger housing (28) and the outer heat exchanger housing (34).

## Revendications

1. Système de chauffage dans un véhicule (11), comprenant :
- un appareil de chauffage (12) avec un agencement de chauffage (14) et un agencement d'échangeur de chaleur (26) pour la transmission de la chaleur mise à disposition dans l'agencement de chauffage (14) à un fluide caloporteur à chauffer, dans lequel l'agencement d'échangeur de chaleur (26) comprend une chambre d'écoulement de fluide caloporteur (40) pouvant être traversée par le fluide caloporteur avec une entrée de chambre d'écoulement (42) et une sortie de chambre d'écoulement (44),
- une pompe à fluide caloporteur (52) avec une entrée de pompe (60) et une sortie de pompe (64),
- une première zone de conduite de fluide caloporteur (62) se raccordant à l'entrée de pompe (60), dans lequel la première zone de conduite de fluide caloporteur (62) est conçue de manière flexible dans son tronçon de conduite (80) se raccordant à l'entrée de pompe (60),
- une deuxième zone de conduite de fluide caloporteur (66) se raccordant à la sortie de pompe (64), dans lequel la deuxième zone de conduite de fluide caloporteur (66) est conçue de manière flexible dans sa section de conduite (82) se raccordant à la sortie de pompe (64),
dans lequel, en association avec la première zone de conduite de fluide caloporteur (62), un premier agencement de support (68) est prévu pour supporter la première zone de conduite de fluide caloporteur (62) sur le véhicule (11) et, en association avec la deuxième zone de conduite de fluide caloporteur (66), un deuxième agencement de support (70) est prévu pour supporter la deuxième zone de conduite de fluide caloporteur (66) sur le véhicule (11), dans lequel la pompe à fluide caloporteur (52) est disposée en porte-à-faux dans le véhicule en ce que la pompe à fluide caloporteur (52) est portée sur le véhicule (11) exclusivement par la première zone de conduite de fluide caloporteur (60) qui lui est raccordée et la deuxième zone de conduite de fluide caloporteur (66) qui lui est raccordée, dans lequel chaque zone de conduite de fluide caloporteur de la première zone de conduite de fluide caloporteur (60) et de la deuxième zone de conduite de fluide caloporteur (66) présente une section de conduite flexible (80, 82) se raccordant à la pompe de fluide caloporteur (62) et une section de conduite rigide se raccordant à la section de conduite flexible (80, 82), **caractérisé en ce que**, pour chaque zone de conduite de fluide caloporteur de la première zone de conduite de fluide caloporteur (60) et de la deuxième zone de conduite de fluide caloporteur (66), la section de conduite flexible (80, 82) se raccorde à la section de conduite rigide en partant de la pompe de fluide caloporteur (62) en amont de l'agencement de support (68, 70) qui lui est associé.

2. Système de chauffage selon la revendication 1, **caractérisé en ce que** la première zone de conduite de fluide caloporteur (62) est conçue, dans son tronçon de conduite (80) se raccordant à l'entrée de pompe (60), comme une conduite en plastique flexible ou/et comme un tube ondulé.

3. Système de chauffage selon la revendication 1 ou 2, **caractérisé en ce que** la deuxième zone de conduite de fluide caloporteur (66) est conçue, dans sa section de conduite (82) se raccordant à la sortie de pompe (64), comme une conduite en plastique flexible ou/et comme un tube ondulé.

4. Système de chauffage selon l'une des revendications précédentes, **caractérisé en ce que** l'agencement de chauffage (14) comprend un ensemble de chambre de combustion (13) à alimenter en combustible et en air de combustion.

5. Système de chauffage selon l'une des revendications précédentes, **caractérisé en ce que** l'agencement d'échangeur de chaleur (26) comprend un boîtier d'échangeur de chaleur intérieur (28) avec une paroi périphérique intérieure (30) et une paroi de fond intérieure (32), ainsi qu'un boîtier d'échangeur de chaleur extérieur (34) avec une paroi périphérique extérieure (36) et une paroi de fond extérieure (38), dans lequel la chambre d'écoulement de fluide caloporteur (40) est formé entre le boîtier d'échangeur de chaleur intérieur (28) et le boîtier d'échangeur de chaleur extérieur (34).
